# EUROPEAN PATENT APPLICATION

(11) **EP 4 844 669 A1**
(43) Date of publication of application: **25.11.2026**
(21) Application number: 26180778.8
(22) Date of filing: 22.05.2026
(51) Int. Cl.: G06T 5/50, G06T 7/00

(54) **SUPPRESSION OF BACKGROUND STRUCTURES IN A DENTAL PANORAMIC IMAGE**

(30) Priority: 23.05.2025 US 202563811376 P
(71) Applicant: Maur, Susanne, 64625 Bensheim (DE); Hülsbusch, Markus, 68642 Bürstadt (DE)
(72) Inventor: Maur, Susanne, 64625 Bensheim (DE); Hülsbusch, Markus, 68642 Bürstadt (DE)
(74) Representative: Taor, Simon Edward William

(57) **Abstract**

An example method to suppress artifacts in dental panoramic images may include capturing X-ray projection data by scanning a dental arch of a patient during an imaging cycle, constructing a first panoramic image from the X-ray projection data, the first panoramic image constructed along a dental arch layer corresponding to the dental arch of the patient, constructing one or more second panoramic images from the X-ray projection data, the one or more second panoramic images constructed along an artifact layer corresponding to artifacts to be suppressed, constructing one or more third panoramic images that represent the one or more second panoramic images transformed to a position of the dental arch layer, constructing a fourth panoramic image by performing a pixel-wise combination of the first panoramic image and the one or more third panoramic images to compensate for artifacts, and transmitting the fourth panoramic image to an external system.

## Description

### PRIORITY

This application claims the benefit of priority to United States Provisional Patent Application No. 63/811,376, filed May 23, 2025, and titled "SUPPRESSION OF BACKGROUND STRUCTURES IN A DENTAL PANORAMIC IMAGE", which is incorporated herein by reference in its entirety.

### BACKGROUND

Traditional dental panoramic imaging systems face significant challenges in effectively handling background (artifact) structures that interfere with diagnostic clarity. In areas where X-rays pass through the spine during imaging, the high absorption creates bright shadows that overlap with and obscure critical dental structures. Current methods often rely on increasing radiation dose through kV adjustments, which is not patient-specific and can only partially compensate for the increased absorption. Existing image processing methods for local contrast optimization lack physical reference and can distort image information, potentially leading to artifacts that complicate diagnostic evaluation.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a diagram illustrating a system for dental panoramic image artifact compensation, according to an embodiment.
FIG. 2 illustrates an example of a dental panoramic image before compensation of artifacts, according to an embodiment.
FIG. 3 illustrates an example of an artifact panoramic image focused on an artifact layer, according to an embodiment.
FIG. 4 illustrates an example of a reconstructed artifact panoramic image focused on a dental arch layer, according to an embodiment.
FIG. 5 illustrates an example of a composite dental panoramic image, according to an embodiment.
FIG. 6 is a flowchart illustrating a method for suppressing artifacts in a dental panoramic image, according to an embodiment.
FIG. 7 illustrates generally an example of a block diagram of a machine upon which any one or more of the techniques discussed herein may perform in accordance with some examples.

### DETAILED DESCRIPTION

The systems and techniques described herein may be used to suppress artifacts in dental panoramic images by reconstructing multiple panoramic images focused on different layers and combining them to remove unwanted artifacts. In panoramic dental imaging, areas where X-rays pass through the spine during imaging show particularly high absorption and appear especially bright in the resulting images. Current solutions like kV increase during exposure only partially compensate for this effect through increased dose. Image processing methods for local contrast optimization lack physical reference and can introduce artifacts requiring evaluation.

To address these issues, a system constructs multiple panoramic images focused on different layers and combines them to remove unwanted artifacts. The process may begin by constructing a first panoramic image focused on a dental arch layer along the mandibular arch. A second panoramic image may then be constructed with an image focused on an artifact layer. The artifact layer may be positioned in space and correspond with positions of objects or physiological structures that are physically located in front of (foreground) or behind (background) the layer of interest. The second panoramic image is used in combination with the first panoramic image to create a third panoramic image. The third panoramic image includes the artifacts from the artifact layer as projected onto the dental arch layer. In an embodiment, the projection may be performed by directly remapping (or distorting) the second panoramic image to the position of the dental arch layer of the first panoramic image taking into account projection geometric. In another embodiment, virtual panoramic image slices are generated from the second panoramic image and the virtual panoramic image slices are reconstructed onto the dental arch layer of the first panoramic image to create the third (reconstructed) panoramic image. The third panoramic image may undergo filtering using different low-pass filter strengths in horizontal (u) and vertical (v) directions to adjust correction strength. Artifacts in the first panoramic image are then compensated for by performing pixel-wise combinations of pixels in the first panoramic image with corresponding pixels in the third panoramic image to create a fourth output panoramic image.

The reconstruction process may incorporate automatic position adjustments, with the layer position of the first panoramic image being automatically adjusted to focus on dental structures using autofocus. For the second panoramic image, the layer position may automatically be adjusted to align with the artifacts and positioned orthonormal to the X-ray projection direction. The output image may undergo post-processing, including noise reduction, contrast enhancement, and logarithmization, with the third panoramic image serving as an input parameter during noise reduction.

Consider a case where a patient has multiple overlapping structures affecting image quality, such as opposing jaw structures or metal artifacts from dental work or jewelry. To handle the various artifacts, the system may then reconstruct multiple artifact-focused layers. For example, one layer may capture spinal structures, while another focuses on opposing jaw interference or metallic artifacts from fillings and jewelry. The system may carefully align each artifact layer's position orthonormal to the projection direction for optimal separation. Through filtering and processing of these multiple layers, the system can systematically remove each source of interference while preserving diagnostic details in the dental structures. This approach may allow clinicians to obtain clear, high-contrast images of dental structures that would otherwise be obscured by overlapping anatomical features or dental hardware, enabling more accurate diagnosis without requiring increased radiation exposure to the patient. Additional details and examples are given below.

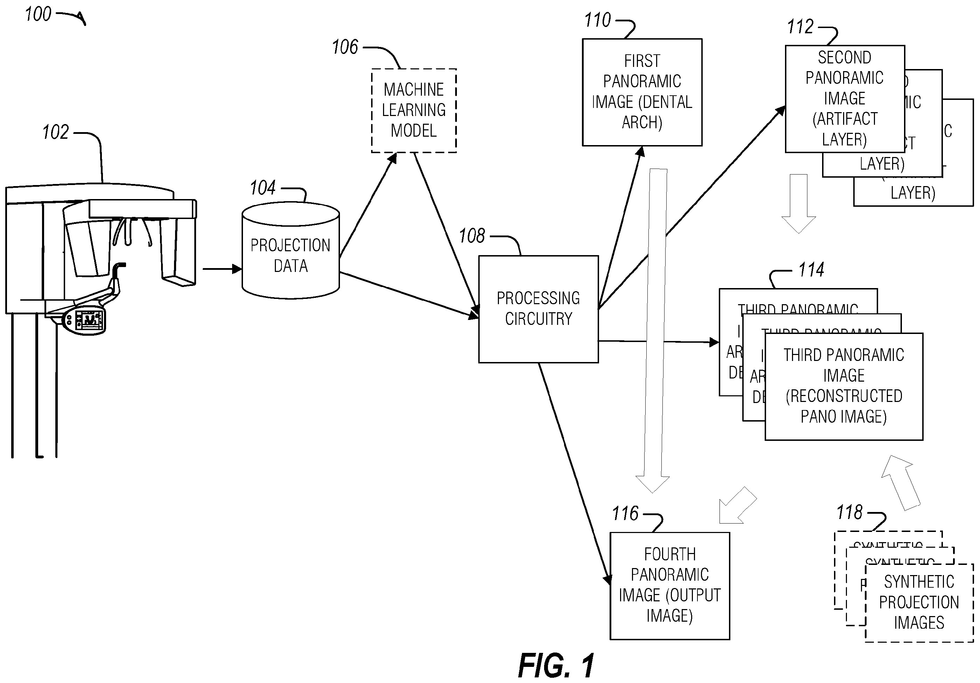

FIG. 1 is a diagram illustrating a system 100 for dental panoramic image artifact compensation, according to an embodiment. The system 100 addresses, among other things, the X-ray absorption challenge where spine intersection creates brightness variation in a panoramic dental image. The system 100 may establish an imaging configuration where X-ray radiation traverses both mandibular arch and spine structure during an imaging cycle. This radiation path may create a region of high attenuation where X-ray beam intersects dental structure and spine through multi-layer absorption.

The system 100 may include a dental panoramic imaging system 102. The dental panoramic imaging system 102 provides tomosynthesis reconstruction. In an implementation, the dental panoramic imaging system 102 includes an extraoral X-ray imaging device having an X-ray source and a detector array mounted on a rotating arm. During an imaging cycle, the rotating arm traverses an arc around a subject's head while the X-ray source emits a collimated beam that passes through the patient's anatomy and is received by a detector array. The detector array captures a sequence of projection frames at successive angular positions along the arc. Each projection frame records X-ray attenuation data representing the cumulative absorption along the beam path, which intersects multiple anatomical structures at different depths - including the dental arch, alveolar bone, soft tissue, and structures posterior to the dental arch such as the cervical spine. The complete set of projection frames constitutes the X-ray projection data for the imaging cycle. In addition, the X-ray projection data may include information regarding projection geometry or the X-ray imaging device's position or movement during the imaging cycle.

The dental panoramic imaging system 102 stores the projection data in a storage device 104 accessible by processing circuitry (e.g., an image processor or image processing circuitry). The processing circuitry reconstructs panoramic images from the projection data using tomosynthesis, in which the projection frames are shifted and summed according to a defined slice layer geometry so that structures at the depth of the selected layer are depicted in focus while structures at other depths are blurred.

For a dental arch layer, the slice layer geometry defines a curved surface that may follow the shape of the dental arch. For an artifact layer, the slice layer geometry may define a planar surface that may be positioned at other depths corresponding to artifacts structures. The artifact layer may include objects or physiological structures that are physically located in front of (foreground, e.g., lips, patient fixation device, etc.) or behind (background, e.g., spine, opposing jaw, etc.) the subject of interest (e.g., patient's dentition). By selecting different slice layer geometries and applying the tomosynthesis reconstruction to the same set of projection frames, the processing circuitry generates multiple panoramic images focused on different anatomical depths from a single imaging cycle without requiring additional radiation exposure to the patient.

A machine learning model 106 may optionally be used to process captured projection data to separate dental structures from background or foreground artifacts. The machine learning model 106 may implement an algorithm designed to identify and isolate an artifact's structure (e.g., spine) within an image reconstructed from the projection data. In some examples, the machine learning model 106 may utilize training data to enhance separation between dental information and artifact information. The machine learning model 106 may incorporate a layer position adjustment capability to maintain precise anatomical structure alignment through automated calibration.

Processing circuitry 108 is used to reconstruct a first panoramic image 110 from the projection data stored in the storage device 104. The first panoramic image 110 may focus on a dental arch layer through specialized reconstruction. The dental arch layer is based on a focal curve that generally follows a patient's jawbone and dentition anatomy. Thus, the dental arch layer may be curved in a U-shaped geometrical shape to conform roughly to a patient's jaw anatomy. The first panoramic image 110 is generated using a dental arch layer positioned along a mandibular arch through precise geometric alignment. In some examples, the first panoramic image 110 may be constructed with an autofocus capability to adjust layer position for enhanced dental structure visualization. The processing circuitry 108 may employ a reconstruction algorithm to generate a sharp dental structure representation while managing interference from artifact elements through specialized filtering techniques.

The processing circuitry 108 is then used to reconstruct one or more second panoramic images 112 that concentrate on artifacts. The artifact layers may be planar and at positions that approximate the positions of artifacts, such as the cervical spine, opposing arch, or other artifacts, which are compensated for in the first panoramic image 110. The second panoramic image 112 may be positioned orthonormal to a projection direction to achieve optimal artifact capture through geometric optimization. In some examples, the second panoramic images 112 may be filtered to modify artifact information, for example, through use of low-pass frequency suppression. The processing circuitry 108 may process an artifact layer or volume to address interference from an opposing jaw, a dental filling, a patient fixation device, or a patient positioning device through specialized compensation techniques.

The second panoramic images 112 are reconstructed from the same X-ray projection data using a slice layer positioned at the depth of the artifacts to be suppressed - for example, at the depth of the cervical spine behind the dental arch. The layer geometry for the artifact slice differs from the dental arch layer; the artifact slice may follow a different curved or planar path corresponding to the spatial location of the artifact's structure.

Optionally, the system automatically adjusts the slice position of the second panoramic image to align with the detected position of the artifacts (e.g., the spine). The disclosure describes aligning the artifact layer position as orthonormal as possible to the projection direction, which can improve the sharpness of the artifact representation and the subsequent remapping accuracy.

Optionally, the information content of the second panoramic image 112 is reduced or adapted before further processing - for example, by filtering to suppress low-frequency components. This pre-filtering can remove broad intensity variations that are not attributable to the target artifact, improving the selectivity of the subsequent compensation.

In alternative embodiments, multiple second panoramic images 112 are used to suppress artifacts other than the spine, or to suppress multiple artifacts concurrently. For example, the second panoramic image 112 may be reconstructed at slice positions corresponding to an opposing jaw, metallic dental restorations in the opposing jaw, earrings or other jewelry, or a patient fixation device (e.g., a bite block or chin rest). When multiple artifacts at different depths are targeted, a separate second panoramic image 112 may be reconstructed for each artifact layer/depth, and the respective third panoramic images 114 are each combined against the first panoramic image 110. Alternatively, an artifact volume encompassing multiple depths may be generated and used to produce a single third panoramic image 114 for later combination with the first panoramic image 110.

In alternative embodiments, multiple second panoramic images 112 are reconstructed at different artifact layer positions, and an artifact volume is generated from the plurality of images. This artifact volume provides a three-dimensional representation of the artifacts and can be used in place of a single artifact slice for constructing the third panoramic image.

The processing circuitry 108 is then used to generate one or more third (reconstructed) panoramic images 114 from the corresponding second panoramic images 112. For example, in an implementation, a reconstructed panoramic image 114 is calculated by remapping a second panoramic image 112 onto the layer of the first panoramic image 110. In some examples the remapping technique may be a linear transformation of spatial positions in the second layer onto spatial positions of the first layer.

Alternatively, the system 100 may construct the third panoramic image 114 from multiple synthetic projection images 118 to match corresponding first panoramic image slice positions through precise geometric alignment. In an embodiment, a synthetic projection image 118 is a remapped portion of the second panoramic image 112 that is projected onto the positions of the x-ray detector. To generate synthetic projection images 118, the system uses the X-ray projection geometry, but does not use the stored original X-ray projection data 104 as captured by the device. The synthetic projection images 118 are similar to the X-ray projection data 104 in pixel width and height (e.g., approximately 60 pixels wide). While the X-ray projection data 104 contains information where X-ray radiation passed through a patient's head as read out from the x-ray detector, the synthetic projection images 118 are generated by simulation of virtual X-ray beams, which would be used to generate the first panoramic image 110 and would have been recorded by a virtual detector. The complete recording process including device rotation around the patient's head are simulated. Use of this virtual (synthetic) scan makes it possible to reconstruct different new panoramic images from these synthetic projection images 118, especially the third panoramic image 114 along the dental arch layer. Therefore, it is possible to reconstruct alternative panoramic images from these synthetic projection images 118, including the third panoramic image 114 along the dental arch layer. Synthetic projection images 118 are generated from one or more second panoramic images 112 using X-ray projection geometry corresponding to the X-ray projection data 104. The one or more third panoramic images 114 are constructed along the dental arch layer from the synthetic projection images 118 using the X-ray projection geometry. The processing circuitry 108 may utilize a processing algorithm to optimize information transfer between layers while maintaining spatial relationships through precise geometric calculations.

After generating the third panoramic images 114, the processing circuitry 108 may apply corrective processing to further reduce artifacts through specialized filtering operations. In some examples, the processing circuitry 108 may utilize a low-pass filter with variable strength in horizontal (u) and vertical (v) directions to achieve precise correction control. The third panoramic image 114 may be further processed to ensure a panoramic image with uniform contrast and brightness characteristics, particularly in the anterior tooth region where spine interference manifests through X-ray absorption.

The processing circuitry 108 is then used to reconstruct a fourth (composite output) panoramic image 116 through a systematic approach to layer separation. The fourth panoramic image 116 is a result of processing that compensates for artifacts found in the first panoramic image 110 by removing or reducing the elements in the second panoramic images 112 by mathematical operations using the third panoramic images 114. In an embodiment, the first panoramic image 110 is divided by the third panoramic images 114 to produce the fourth panoramic image 116. In an embodiment, the third panoramic images 114 are subtracted from the first panoramic image 110 to produce the fourth panoramic image 116. Other types of mathematical operations may be used to suppress the artifacts represented in the third panoramic images 114 in the fourth panoramic image 116.

The processing circuitry 108 outputs an output panoramic image 116 through artifact compensation by performing a pixel-wise combination of the first panoramic image 110 with the third panoramic images 114 through systematic combination. The processing circuitry 108 may implement a post-processing operation on the output fourth panoramic image 116, which may include noise reduction, contrast enhancement, or logarithmization through specialized image processing. In some examples, the processing circuitry 108 may incorporate the third panoramic image 114 information during noise reduction through adaptive processing.

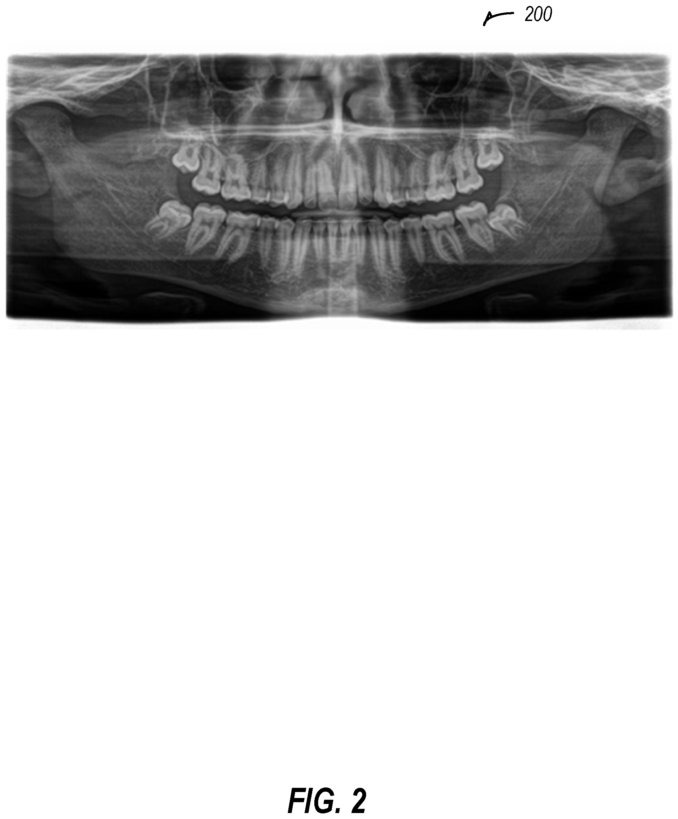

FIG. 2 illustrates an example of a dental panoramic image 200 before compensation of artifacts, according to an embodiment, where areas in which X-rays have passed through the spine during the imaging cycle show particularly high absorption and are displayed with increased brightness. The artifacts here, primarily the spine, may be referred to as "background" artifacts because they are disposed behind the jaw arch during the scan. However, it is understood that artifacts may be disposed in front of (e.g., foreground artifacts) or behind (e.g., background artifacts) a region of interest in the exposed area.

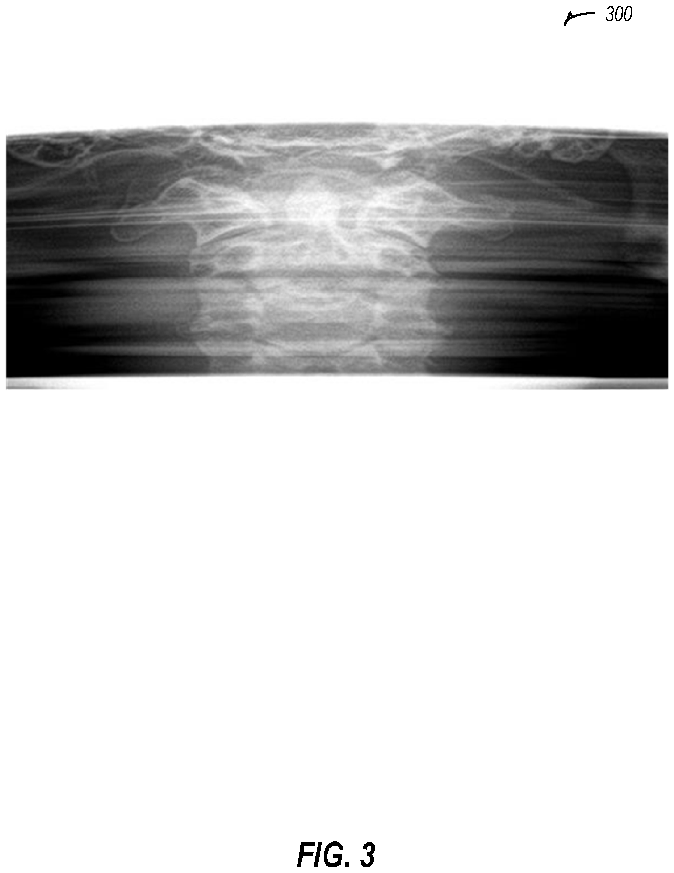

FIG. 3 illustrates an example of an artifact panoramic image 300 focused on an artifact layer, according to an embodiment. In examples, this artifact panoramic image 300 may represent the second panoramic image 112, which is focused specifically on capturing artifacts on the artifact layer, such as those created by the spine. In some examples, the system 100 may reconstruct the artifact panoramic image 300 using a focused layer positioned in the area where artifacts need to be suppressed. The system 100 may automatically adjust the layer position to align with the artifacts, such as the spine, or may align the layer position to be orthonormal to the projection direction. The system 100 may process the artifact panoramic image 300 through various steps, including the potential reduction or adaptation of the information through filtering, such as the suppression of low frequencies.

In some examples, the system 100 may use the artifact image 300 in conjunction with the machine learning model 106 to optimize the artifact detection and compensation processes. The system 100 may identify the artifacts captured in the artifact image 300 and determine the appropriate filtering parameters and correction strengths needed for effective artifact suppression.

In a further example, the system 100 may use the artifact image 300 as part of the process to create intermediate synthetic projection images, which may then be reconstructed onto the dental arch layer position of the first panoramic image 110 to generate the reconstructed panoramic third panoramic image 114. The system 100 may utilize this reconstruction process to ensure proper alignment between the artifact information and the dental structures in the final compensated image.

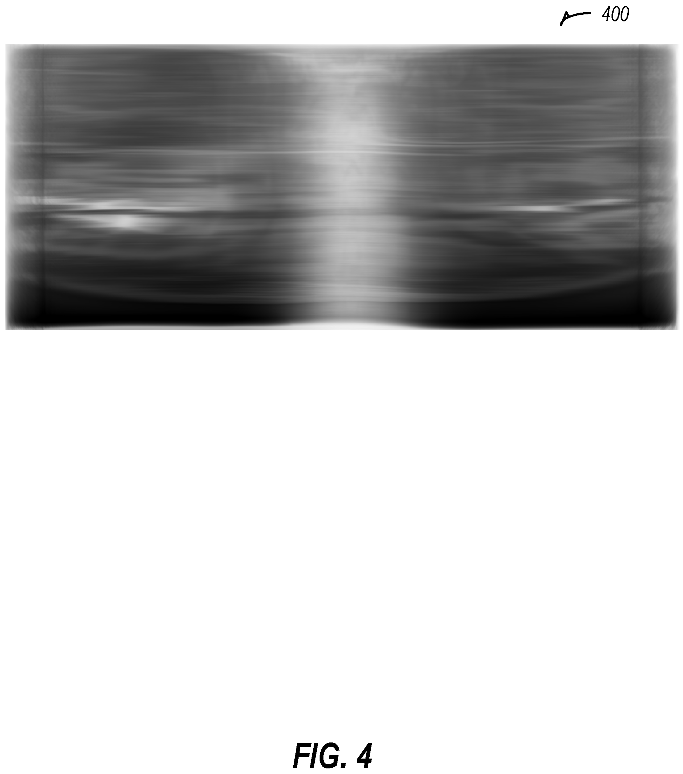

FIG. 4 illustrates an example of a reconstructed artifact panoramic image 400 focused on a dental arch layer, according to an embodiment. The reconstructed artifact panoramic image 400 is constructed using the artifact image 300 that is remapped from the artifact layer to the dental arch layer using projection geometry. The resulting image over-represents the artifacts. As seen in FIG. 4, the reconstructed artifact panoramic image 400 exhibits strong brightening in the area where the X-rays are absorbed by the spine. In some examples, the reconstructed artifact panoramic image 400 may show areas of pronounced brightening where X-rays are absorbed by the spine during the imaging process, particularly along the dental standard layer that follows the mandibular arch. In some implementations, this brightening effect may occur due to the X-rays passing through both the dental structures and the spine during the imaging cycle, resulting in regions of particularly high absorption. The system 100 may identify these areas where the mandibular arch intersects with the spine's position, creating zones of increased brightness that may affect image quality.

The reconstructed artifact panoramic image 400 demonstrates how conventional panoramic slices may display this interference pattern, where the spine's position relative to the dental arch may create areas of variable absorption. The system 100 may use this type of image as a reference point to evaluate the effectiveness of subsequent artifact compensation techniques.

The brightening effect visible in the reconstructed artifact panoramic image 400 may be particularly pronounced in the anterior teeth region, where the X-ray path through both the dental structures and spine may create the most significant absorption variations. The system 100 may use this characteristic pattern of interference to develop targeted compensation strategies for specific regions of the image.

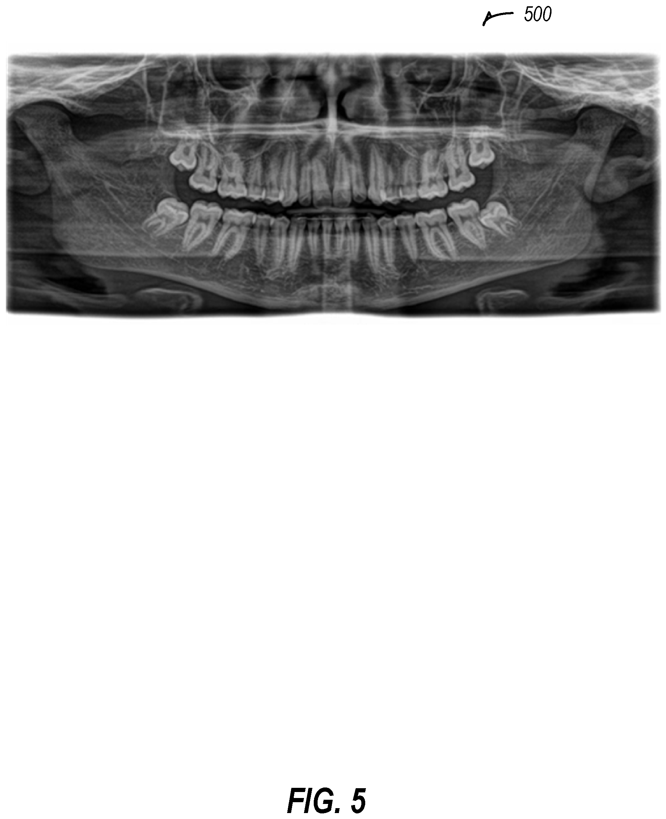

FIG. 5 illustrates an example of a composite dental panoramic image 500 after compensation of artifacts with techniques described herein, according to an embodiment. The composite dental panoramic image 500 is the result of combining or compositing the first panoramic image 110 and the reconstructed third panoramic images 114 (e.g., the reconstructed artifact panoramic image 400).

The composite dental panoramic image 500 may be further processed before or while being presented to a user. In an embodiment, the system 100 may apply specific low-pass filter in u and v directions to adjust the correction strength. Alternatively, correction strengths in the vertical (u) or horizontal (v) directions are adjusted to further reduce projected artifact images. In the composite dental panoramic image 500, the spine's visibility may be reduced through enhanced filtering parameters, which may result in improved visualization of the dental structures. For example, the system 100 may apply stronger low-pass filtering in specific directions to achieve more effective suppression of the spinal artifacts while maintaining the clarity of the dental and jaw bone structures. In some examples, this filtering technique may incorporate different strengths of low-pass filters in the u and v directions, which may be specifically adjusted to optimize the removal of artifacts from the spine region. The resulting image may demonstrate improved contrast in the anterior teeth area, where X-ray absorption from the spine typically creates the most significant interference.

The composite dental panoramic image 500 is the result of a pixel-wise combination operation that adjusts the original image using the synthetic image. The choice of pixel-wise operation (e.g., division or subtraction) for compensating for artifacts in the first panoramic image is grounded in the physics of X-ray attenuation. As an X-ray beam traverses multiple structures along its path from source to detector, the detected intensity is governed by the Beer-Lambert law: I = I₀ · e^(-*a*₁·*c*₁·*d*₁) · e^(*-a*₂*·c*₂*·d*₂), where I₀ is the emitted X-ray intensity, I is the detected intensity, and each exponential term represents the attenuation contribution of a respective structure along the beam path, with ***a*** denoting the absorption coefficient, ***c*** the concentration, and ***d*** the thickness of that structure.

Because the attenuation contributions of superimposed structures combine as a product of exponential terms, the contribution of an unwanted artifacts such as the cervical spine is a multiplicative factor applied to the detected signal. To remove this multiplicative contribution, the first panoramic image is divided by the third panoramic image (which contains the remapped and filtered estimate of the artifact contribution at the dental arch layer position). This division operation cancels the multiplicative attenuation factor attributable to the artifact's structure. In an alternative implementation, if logarithmic processing is applied to the panoramic images or to the projection data prior to reconstruction, the multiplicative relationship in the image domain becomes an additive relationship in the logarithmic domain. In that case, the pixel-wise combination operation is performed as a subtraction of the logarithmically transformed third panoramic image from the logarithmically transformed first panoramic image, which is mathematically equivalent to the division operation in the linear intensity domain.

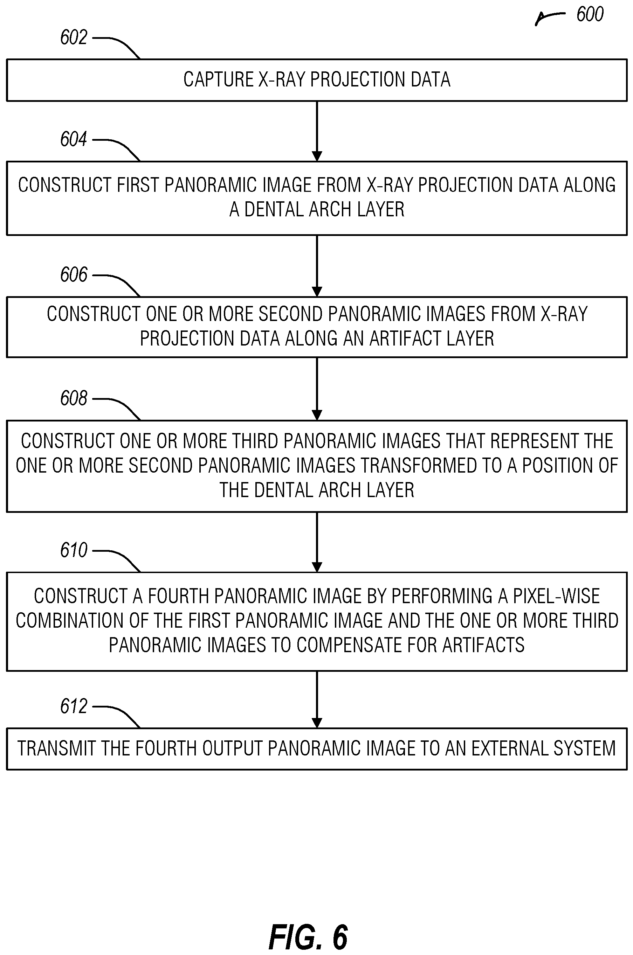

FIG. 6 is a flowchart illustrating a method 600 for suppressing artifacts in a dental panoramic image obtained using an extraoral X-ray imaging device, according to an embodiment. In an example, operations of the method 600 may be performed by processing circuitry, for example by executing instructions stored in memory. The processing circuitry may include a processor, a system on a chip, or other circuitry (e.g., wiring). For example, the method 600 may be performed by processing circuitry of a device (or one or more hardware or software components thereof). In some examples, the processing circuitry may include image processing hardware optimized for performing layer reconstruction operations. The processing circuitry may interface with memory components storing projection data acquired during an X-ray imaging cycle of a dental panoramic imaging system.

At 602, the method 600 includes the operation of capturing X-ray projection data by scanning a dental arch of a patient during an imaging cycle. In an implementation, an extraoral X-ray imaging device rotates around the patient's head during the imaging cycle, acquiring a series of projection images at successive angular positions relative to the patient's dental arch. During the scan, X-rays pass through multiple anatomical structures along their path, including the dental arch, surrounding soft tissue, and structures behind the arch such as the cervical spine. The projection data therefore contains superimposed attenuation information from both foreground dental structures and artifact structures (artifacts such as spine, opposing jaw, jewelry, implants, etc.). The projection data set constitutes the raw input for all subsequent panoramic image reconstructions; no additional scan or separate exposure is required to obtain artifact information. The projection data set may also include the image device's position or movement during the imaging cycle, image sensor properties or settings, or other environmental data. It is understood that the imaging device may apply a kV modulation during the scan (e.g., increasing tube voltage in regions where the beam path intersects the spine).

At 604, the method 600 includes the operation of constructing a first panoramic image from the X-ray projection data, the first panoramic image constructed along a dental arch layer corresponding to the dental arch of the patient. The dental arch layer may also be referred to as a first slice layer of a dental arch of the patient. The first panoramic image may be constructed with a specific focus on depicting the mandibular arch clearly while managing the absorption effects from artifact anatomical structures. In an embodiment, the first panoramic image is obtained by receiving an image file containing X-ray projection data from a separate imaging system, where the X-ray projection data is captured during a panoramic imaging cycle.

In an embodiment, the first panoramic image is reconstructed using tomosynthesis, where the projection data is combined so that a defined slice layer along the mandibular arch is depicted in focus while structures at other depths (either in the foreground or background of the slice layer) are blurred. The slice layer follows the curved geometry of the dental arch. Optionally, the system performs automatic layer position adjustment to align the slice layer with the patient's actual dental structures. This operation to dynamically adjust the slice position to optimally align with dental structures may be referred to as an autofocus operation. The autofocus mechanism adjusts the layer position based on analysis of sharpness or contrast metrics computed from the projection data or from an initial reconstruction. Typical autofocus algorithms use multiple reconstructions of a first panoramic image at different slice positions, although it is understood that other images (second panoramic images or third panoramic images) may be used as well.

The first panoramic image represents the "useful layer" containing the dental diagnostic information. However, because tomosynthesis blurs but does not eliminate out-of-focus structures, the first panoramic image still contains residual contributions from artifact structures such as the spine, which manifest as regions of increased brightness and reduced contrast - particularly in the anterior teeth region.

At 606, the method 600 includes the operation of constructing one or more second panoramic images from the X-ray projection data, the one or more second panoramic images constructed along an artifact layer corresponding to foreground/background artifacts to be suppressed from the first panoramic image. The artifact layer may also be referred to as a second slice layer of artifacts to be suppressed. In some examples, the one or more second panoramic images may be reconstructed with a slice layer specifically positioned in the area of artifacts to be suppressed, such as the spine. In other examples, the reconstruction of the second panoramic image may include adjustment of the slice position to align with the position of the artifacts. The system may position the layer as orthonormal as possible to the projection direction to optimize the capture of artifacts.

The construction process may incorporate specialized algorithms to separate the artifact information from the useful dental structures. In some examples, the system may utilize dedicated processing components to optimize the capture and isolation of artifacts within this second panoramic image (e.g., object detection and identification methods to identify possible artifacts).

Various artifacts may be detected. In various embodiments, the artifacts include at least one of: a spine of the patient, an opposing jaw structure of the patient, lips of the patient, a patient fixation device, or patient positioning device.

In an embodiment, constructing one or more second panoramic images includes constructing a plurality of panoramic images from the X-ray projection data, the plurality of panoramic images corresponding to artifact layers of artifacts to be suppressed, and generating an artifact volume from the plurality of panoramic images, the artifact volume used with the first panoramic image to construct the third panoramic image.

At 608, the method 600 includes the operation of constructing one or more third panoramic images that represent the one or more second panoramic images transformed to a position of the dental arch layer. This transformation may be referred to as warping, translating, mapping, or distorting and refers to moving pixel values from positions in the artifact layer to corresponding positions in the dental arch layer based on projection geometry. This may be performed in different ways.

In an embodiment, constructing the one or more third panoramic images includes generating a plurality of synthetic projection images from the one or more second panoramic images using X-ray projection geometry corresponding to the X-ray projection data and constructing the one or more third panoramic images along the dental arch layer from the plurality of synthetic projection images using the X-ray projection geometry. In such an embodiment, the synthetic projection images are image slices that correspond to the projection geometry of the X-ray source and detectors of the dental panoramic imaging system 102. Each synthetic projection image simulates what a detector would record if only the artifacts (as identified in the artifact layer of the second panoramic image) were present, using the known projection geometry of the imaging system (e.g., source positions, detector positions, and angular sampling from the original scan). The system then reconstructs a new panoramic image from these synthetic projection images using the slice layer geometry of the first panoramic image. The result is the third panoramic image, which is a representation of the artifacts as they project onto the dental arch layer.

The synthetic projection images generated from the second panoramic image may be combined (calculated) with the original X-ray projection images before reconstruction. In this variant, the artifact's contribution is reduced directly in the projection domain, and the final fourth panoramic image is then reconstructed from these corrected projection images being transformed onto the slice position of the first panoramic image. This approach performs the compensation before tomosynthesis reconstruction rather than after.

In another embodiment, a direct mapping algorithm may be used to transform the one or more second panoramic images at the artifact layer to the one or more third panoramic images at the position of the dental arch layer. In an embodiment, constructing the one or more third panoramic images includes remapping the one or more second panoramic images onto a position of the dental arch layer of the first panoramic image. This may be performed using a linear mapping. The third panoramic image represents the artifact information remapped (re-projected) to the spatial position of the first slice layer (dental arch layer). This remapping is performed so that the artifact contribution, as it would appear superimposed on the dental arch layer, can be estimated and subsequently subtracted or offset from the original first panoramic image. This remapping accounts for the projection geometry, specifically, the difference in magnification, shift, and distortion between the two slice layer positions as seen from each projection angle. This option avoids the intermediate step of generating and reconstructing synthetic projections but requires an accurate geometric model relating the two layer positions.

At 610, the method 600 includes the operation of constructing a fourth panoramic image by performing a pixel-wise combination of the first panoramic image and the one or more third panoramic images to compensate for artifacts. The third panoramic images represent the estimated contribution of artifacts at the dental arch layer position and are used to compensate the first panoramic image. The pixel-wise compensation is performed by dividing, subtracting, multiplying, or otherwise combining the pixel values of the third panoramic images with the first panoramic image so that the artifact's contribution is reduced or removed in the resultant fourth panoramic image. The fourth panoramic image is a compensated panoramic image with more uniform contrast and brightness across the dental arch, particularly in the anterior teeth region where spine overlap causes the most pronounced brightness increase in uncompensated images.

In an embodiment, constructing the fourth panoramic image includes adapting an intensity of the one or more third panoramic images to alter the strength of correction during pixel-wise combinations by using a local or global thresholding operation, using a global normalization operation, or using multiplication operation. This type of operation may specifically target areas where X-ray absorption by the spine creates pronounced brightness variations.

Stronger low-pass filtering reduces high-frequency detail in the artifact estimates, which can prevent over-correction or introduction of new artifacts in the compensated image. The directional asymmetry of the filter strengths allows the correction to be tuned independently for horizontal and vertical image characteristics. The correction strength of filters controlled by filtering parameters and optionally applied to the one or more third panoramic images, can be adjusted to balance artifact suppression against preservation of image detail.

Various filtering operations may be performed. In an embodiment, constructing the fourth panoramic image includes filtering the one or more third panoramic images to reduce information. In a further embodiment, the filtering includes using at least one of a low-pass filter with different strengths in a vertical direction and a horizontal direction. In some examples, this filtering may include suppression of low frequencies to enhance the isolation of artifacts.

In another example, multiple third panoramic images are used to represent multiple artifact layers or an artifact volume to capture various types of artifacts. The reconstruction process may account for different types of unwanted structures beyond the spine, such as opposing jaws, dental fillings, earrings, and patient fixation devices.

In other examples, the filtering operation may be implemented as part of a broader artifact compensation workflow, where the filtered one or more third panoramic images prepares the artifact information for subsequent pixel-wise operations with the first panoramic image. The system may utilize this filtering step to prepare the artifact information before combining it with the first panographic image information. In some examples, the filtering process may incorporate smoothing operations to optimize the artifact compensation effect.

In another example, the filtering operation may be adjusted based on the specific characteristics of the artifacts being compensated. The system may modify the low-pass filter strengths to accommodate different types of artifacts and their structures, such as spinal artifacts, opposing jaw structures, or patient fixation devices. The filtering process may serve as an important step in ensuring appropriate correction strength for the final fourth panoramic image. In some examples, the system may fine-tune the filter parameters to achieve optimal contrast and brightness homogeneity in the resulting image, particularly in regions where artifacts are most prominent.

Other post-processing may be performed on the fourth panoramic image. In an embodiment, the method 600 includes post-processing the fourth panoramic image, where the post-processing is adapted using the one or more third panoramic images. For example, the post-processing may use increased filter strength when post-processing the fourth panoramic image in areas where the artifacts (e.g., spine) are more prominent. The post-processing compensation process may consider the information from the third panoramic image during post-processing operations. The artifacts' attributes can be determined by analyzing the one or more third panoramic images. As such, in an embodiment, post-processing the fourth panoramic image includes identifying locations of artifacts in the artifact layer and post-processing the fourth panoramic image differently at the locations of the artifacts in the artifact layer compared to other regions of the fourth panoramic image. Post-processing may include operations such as a noise reduction, a contrast enhancement, an edge enhancement, or a logarithmization process. The method 600 and system may tune the post-processing compensation strength by adjusting the filtering parameters to achieve an optimal artifact suppression while maintaining the diagnostic quality of the dental structures.

Post-processing may be enabled through use of artificial intelligence (AI), trained models, learning systems, or the like. In an embodiment, post-processing is performed using at least one of an adaptive filtering algorithm, a machine learning model, or a hybrid approach combining machine learning-based segmentation with other image processing techniques.

Post-processing may also include an autofocus operation. In an embodiment the fourth panoramic image is the input to an autofocus algorithm. An autofocus algorithm, such as one discussed above with respect to the first panoramic image, may be used in the fourth (output) panoramic image either in the alternative of autofocusing the first panoramic image or in addition to autofocusing the first panoramic image.

At 612, the method 600 includes the operation of transmitting the fourth panoramic image to an external system. The compensated panoramic image (e.g., fourth panoramic image) is transmitted to an external system for display, storage, or further processing. The external system may be a display device for clinical review, a CAD or CAM system for treatment planning or restoration design, a storage system for archival and later diagnostic evaluation, an image processing system for additional analysis, or a remote server for cloud-based workflows. Thus, in various embodiments, the external system includes: a display device, a storage system for diagnostic evaluation, an image processing system, or a remote server.

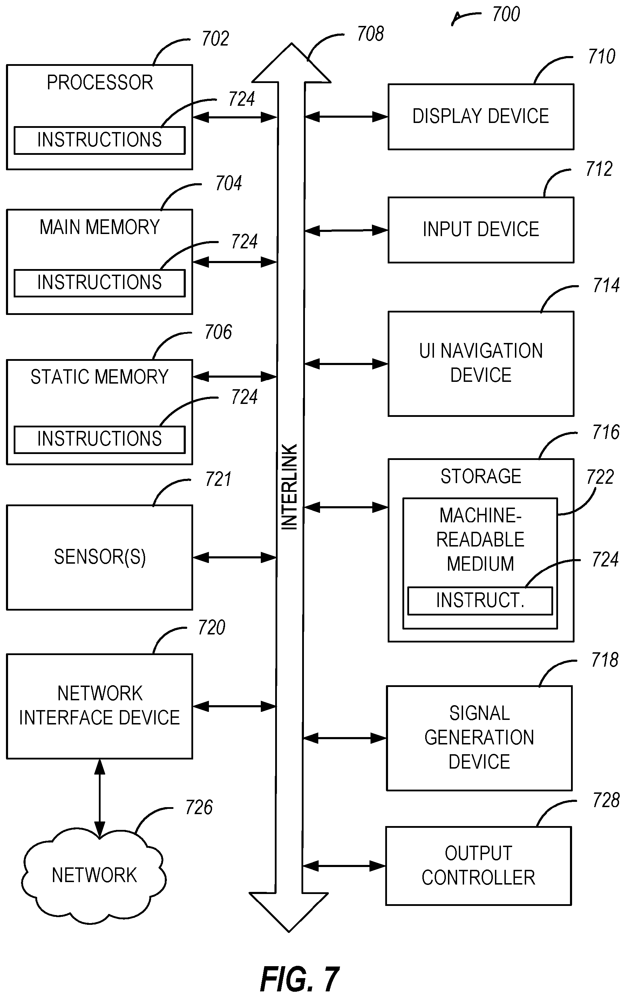

FIG. 7 illustrates generally an example of a block diagram of a machine 700 upon which any one or more of the techniques (e.g., methodologies) discussed herein may perform in accordance with some examples. In alternative embodiments, the machine 700 may operate as a standalone device or may be connected (e.g., networked) to other machines. In a networked deployment, the machine 700 may operate in the capacity of a server machine, a client machine, or both in server-client network environments. In an example, the machine 700 may act as a peer machine in peer-to-peer (P2P) (or other distributed) network environment. The machine 700 may be a rack server, a cloud server, an edge device, a datacenter server, a personal computer (PC), a tablet PC, a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In an example, the hardware may include configurable execution units (e.g., transistors, circuits, etc.) and a computer readable medium containing instructions, where the instructions configure the execution units to carry out a specific operation when in operation. The configuring may occur under the direction of the execution units or a loading mechanism. Accordingly, the execution units are communicatively coupled to the computer readable medium when the device is operating. In this example, the execution units may be a member of more than one module. For example, under operation, the execution units may be configured by a first set of instructions to implement a first module at one point in time and reconfigured by a second set of instructions to implement a second module.

Machine (e.g., computer system) 700 may include a hardware processor 702 (e.g., a central processing unit (CPU), a graphics processing unit (GPU), a hardware processor core, or any combination thereof), a main memory 704 and a static memory 706, some or all of which may communicate with each other via an interlink (e.g., bus) 708. The machine 700 may further include a display unit 710, an alphanumeric input device 712 (e.g., a keyboard), and a user interface (UI) navigation device 714 (e.g., a mouse). In an example, the display unit 410, alphanumeric input device 712 and UI navigation device 714 may be a touch screen display. The machine 700 may additionally include a storage device (e.g., drive unit) 716, a signal generation device 718 (e.g., a speaker), a network interface device 720, and one or more sensors 721, such as a global positioning system (GPS) sensor, compass, accelerometer, or other sensor. The machine 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 716 may include a machine readable medium 722 that is non-transitory on which is stored one or more sets of data structures or instructions 724 (e.g., software) embodying or utilized by any one or more of the techniques or functions described herein. The instructions 724 may also reside, completely or at least partially, within the main memory 704, within static memory 706, or within the hardware processor 702 during execution thereof by the machine 700. In an example, one or any combination of the hardware processor 702, the main memory 704, the static memory 706, or the storage device 716 may constitute machine readable media.

While the machine readable medium 722 is illustrated as a single medium, the term "machine readable medium" may include a single medium or multiple media (e.g., a centralized or distributed database, or associated caches and servers) configured to store the one or more instructions 724.

The term "machine readable medium" may include any medium that is capable of storing, encoding, or carrying instructions for execution by the machine 700 and that cause the machine 700 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 724 may further be transmitted or received over a communications network 726 using a transmission medium via the network interface device 720 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 700, and includes digital or analog communications signals or other intangible medium to facilitate communication of such software.

The following, non-limiting examples, detail certain aspects of the present subject matter to solve the challenges and provide the benefits discussed herein, among others.

Example 1 is a method for suppressing artifacts in a dental panoramic image obtained using an extraoral X-ray imaging device, comprising: capturing X-ray projection data by scanning a dental arch of a patient during an imaging cycle; constructing a first panoramic image from the X-ray projection data, the first panoramic image constructed along a dental arch layer corresponding to the dental arch of the patient; constructing one or more second panoramic images from the X-ray projection data, the one or more second panoramic images constructed along an artifact layer corresponding to artifacts to be suppressed; constructing one or more third panoramic images that represent the one or more second panoramic images transformed to a position of the dental arch layer; constructing a fourth panoramic image by performing a pixel-wise combination of the first panoramic image and the one or more third panoramic images to compensate for artifacts; and transmitting the fourth panoramic image to an external system.

In Example 2, the subject matter of Example 1 includes, wherein the first panoramic image is obtained by receiving an image file containing X-ray projection data from a separate imaging system, wherein the X-ray projection data is captured during a panoramic imaging cycle.

In Example 3, the subject matter of Examples 1-2 includes, wherein constructing one or more second panoramic images comprises: constructing a plurality of panoramic images from the X-ray projection data, the plurality of panoramic images corresponding to artifact layers of artifacts to be suppressed; and generating an artifact volume from the plurality of panoramic images, the artifact volume used with the layer position of the first panoramic image to construct the one or more third panoramic images.

In Example 4, the subject matter of Examples 1-3 includes, wherein constructing the one or more third panoramic images comprises: generating a plurality of synthetic projection images from the one or more second panoramic images using X-ray projection geometry corresponding to the X-ray projection data; and constructing the one or more third panoramic images along the dental arch layer from the plurality of synthetic projection images using the X-ray projection geometry.

In Example 5, the subject matter of Examples 1-4 includes, wherein constructing the one or more third panoramic images comprises: remapping the one or more second panoramic images onto a position of the dental arch layer of the first panoramic image.

In Example 6, the subject matter of Examples 1-5 includes, wherein constructing the fourth panoramic image comprises: adapting an intensity of the one or more third panoramic images to alter a strength of correction by using a local or global thresholding operation, using a global normalization operation, or using multiplication operation.

In Example 7, the subject matter of Examples 1-6 includes, wherein constructing the fourth panoramic image comprises: filtering the one or more third panoramic images to reduce information.

In Example 8, the subject matter of Example 7 includes, wherein filtering comprises: using at least one of a low-pass filter with different strengths in a vertical direction and a horizontal direction.

In Example 9, the subject matter of Examples 1-8 includes, post-processing the fourth panoramic image, wherein the post-processing is adapted using the one or more third panoramic images..

In Example 10, the subject matter of Example 9 includes, wherein post-processing the fourth panoramic image comprises: identifying locations of artifacts in an artifact layer; and post-processing the fourth panoramic image differently at the locations of the artifacts in the artifact layer compared to other regions of the fourth panoramic image.

In Example 11, the subject matter of Examples 9-10 includes, wherein the post-processing comprises: at least one of a noise reduction, a contrast enhancement, an edge enhancement, or a logarithmization process.

In Example 12, the subject matter of Examples 9-11 includes, wherein post-processing is performed using at least one of an adaptive filtering algorithm, a machine learning model, or a hybrid approach combining machine learning-based segmentation with other image processing techniques.

In Example 13, the subject matter of Examples 1-12 includes, performing an autofocus process on the fourth panoramic image.

In Example 14, the subject matter of Examples 1-13 includes, wherein the artifacts include at least one of: a spine of the patient, an opposing jaw structure of the patient, lips of the patient, a patient fixation device, or patient positioning device.

In Example 15, the subject matter of Examples 1-14 includes, wherein the external system includes: a display device, a storage system for diagnostic evaluation, an image processing system, or a remote server.

Example 16 is a system for suppressing artifacts in a dental panoramic image obtained using an extraoral X-ray imaging device, the system comprising: a communication circuity to receive X-ray projection data that was captured by scanning a dental arch of a patient during an imaging cycle; and an image processor to: construct a first panoramic image from the X-ray projection data, the first panoramic image constructed along a dental arch layer corresponding to the dental arch of the patient; construct one or more second panoramic images from the X-ray projection data, the one or more second panoramic images constructed along an artifact layer corresponding to artifacts to be suppressed; construct one or more third panoramic images that represent the one or more second panoramic images transformed to a position of the dental arch layer; and construct a fourth panoramic image by performing a pixel-wise combination of the first panoramic image and the one or more third panoramic images to compensate for artifacts, wherein the communication circuity is to transmit the fourth panoramic image to an external system.

In Example 17, the subject matter of Example 16 includes, wherein the first panoramic image is obtained by receiving an image file containing X-ray projection data from a separate imaging system, wherein the X-ray projection data is captured during a panoramic imaging cycle.

In Example 18, the subject matter of Examples 16-17 includes, wherein to construct one or more second panoramic images, the image processor is configured to: construct a plurality of panoramic images from the X-ray projection data, the plurality of panoramic images corresponding to artifact layers of artifacts to be suppressed; and generate an artifact volume from the plurality of panoramic images, the artifact volume used with the layer position of the first panoramic image to construct the one or more third panoramic images.

In Example 19, the subject matter of Examples 16-18 includes, wherein to construct the one or more third panoramic images, the image processor is configured to: generate a plurality of synthetic projection images from the one or more second panoramic images using X-ray projection geometry corresponding to the X-ray projection data; and construct the one or more third panoramic images along the dental arch layer from the plurality of synthetic projection images using the X-ray projection geometry.

In Example 20, the subject matter of Examples 16-19 includes, wherein to construct the one or more third panoramic images, the image processor is configured to: remap the one or more second panoramic images onto a position of the dental arch layer of the first panoramic image.

In Example 21, the subject matter of Examples 16-20 includes, wherein to construct the fourth panoramic image, the image processor is configured to: adapt an intensity of the one or more third panoramic images to alter a strength of correction by using a local or global thresholding operation, using a global normalization operation, or using multiplication operation.

In Example 22, the subject matter of Examples 16-21 includes, wherein to construct the fourth panoramic image, the image processor is configured to: filter the one or more third panoramic images to reduce information.

In Example 23, the subject matter of Example 22 includes, wherein to filter the one or more third panoramic images, the image processor is configured to: use at least one of a low-pass filter with different strengths in a vertical direction and a horizontal direction.

In Example 24, the subject matter of Examples 16-23 includes, wherein the image processor is configured to: post-process the fourth panoramic image, wherein the post-processing is adapted using the one or more third panoramic images..

In Example 25, the subject matter of Example 24 includes, wherein to post-process the fourth panoramic image, the image processor is configured to: identify locations of artifacts in an artifact layer; and post-process the fourth panoramic image differently at the locations of the artifacts in the artifact layer compared to other regions of the fourth panoramic image.

In Example 26, the subject matter of Examples 24-25 includes, wherein to post-process the fourth panoramic image, the image processor is configured to: Use at least one of a noise reduction, a contrast enhancement, an edge enhancement, or a logarithmization process.

In Example 27, the subject matter of Examples 24-26 includes, wherein to post-process the fourth panoramic image, the image processor is configured to use at least one of an adaptive filtering algorithm, a machine learning model, or a hybrid approach combining machine learning-based segmentation with other image processing techniques.

In Example 28, the subject matter of Examples 16-27 includes, wherein the image processor is configured to: perform an autofocus process on the fourth panoramic image.

In Example 29, the subject matter of Examples 16-28 includes, wherein the artifacts include at least one of: a spine of the patient, an opposing jaw structure of the patient, lips of the patient, a patient fixation device, or patient positioning device.

In Example 30, the subject matter of Examples 16-29 includes, wherein the external system includes: a display device, a storage system for diagnostic evaluation, an image processing system, or a remote server.

Example 31 is a non-transitory computer-readable medium including instructions for suppressing artifacts in a dental panoramic image obtained using an extraoral X-ray imaging device, which when executed by a computer, cause the computer to: receive X-ray projection data that was captured by scanning a dental arch of a patient during an imaging cycle; construct a first panoramic image from the X-ray projection data, the first panoramic image constructed along a dental arch layer corresponding to the dental arch of the patient; construct one or more second panoramic images from the X-ray projection data, the one or more second panoramic images constructed along an artifact layer corresponding to artifacts to be suppressed; construct one or more third panoramic images that represent the one or more second panoramic images transformed to a position of the dental arch layer; construct a fourth panoramic image by performing a pixel-wise combination of the first panoramic image and the one or more third panoramic images to compensate for artifacts; and transmit the fourth panoramic image to an external system.

In Example 32, the subject matter of Example 31 includes, wherein the first panoramic image is obtained by receiving an image file containing X-ray projection data from a separate imaging system, wherein the X-ray projection data is captured during a panoramic imaging cycle.

In Example 33, the subject matter of Examples 31-32 includes, wherein the instructions to construct one or more second panoramic images, include instructions to: construct a plurality of panoramic images from the X-ray projection data, the plurality of panoramic images corresponding to artifact layers of artifacts to be suppressed; and generate an artifact volume from the plurality of panoramic images, the artifact volume used with the layer position of the first panoramic image to construct the one or more third panoramic images.

In Example 34, the subject matter of Examples 31-33 includes, wherein the instructions to construct the one or more third panoramic images, include instructions to: generate a plurality of synthetic projection images from the one or more second panoramic images using X-ray projection geometry corresponding to the X-ray projection data; and construct the one or more third panoramic images along the dental arch layer from the plurality of synthetic projection images using the X-ray projection geometry.

In Example 35, the subject matter of Examples 31-34 includes, wherein the instructions to construct the one or more third panoramic images, include instructions to: remap the one or more second panoramic images onto a position of the dental arch layer of the first panoramic image.

In Example 36, the subject matter of Examples 31-35 includes, wherein the instructions to construct the fourth panoramic image, include instructions to: adapt an intensity of the one or more third panoramic images to alter a strength of correction by using a local or global thresholding operation, using a global normalization operation, or using multiplication operation.

In Example 37, the subject matter of Examples 31-36 includes, wherein the instructions to construct the fourth panoramic image, include instructions to: filter the one or more third panoramic images to reduce information.

In Example 38, the subject matter of Example 37 includes, wherein the instructions to filter the one or more third panoramic images, include instructions to: use at least one of a low-pass filter with different strengths in a vertical direction and a horizontal direction.

In Example 39, the subject matter of Examples 31-38 includes, instructions to: post-process the fourth panoramic image, wherein the post-processing is adapted using the one or more third panoramic images..

In Example 40, the subject matter of Example 39 includes, wherein the instructions to post-process the fourth panoramic image, include instructions to: identify locations of artifacts in an artifact layer; and post-process the fourth panoramic image differently at the locations of the artifacts in the artifact layer compared to other regions of the fourth panoramic image.

In Example 41, the subject matter of Examples 39-40 includes, wherein the instructions to post-process the fourth panoramic image, include instructions to: use at least one of a noise reduction, a contrast enhancement, an edge enhancement, or a logarithmization process.

In Example 42, the subject matter of Examples 39-41 includes, wherein the instructions to post-process the fourth panoramic image, include instructions to use at least one of an adaptive filtering algorithm, a machine learning model, or a hybrid approach combining machine learning-based segmentation with other image processing techniques.

In Example 43, the subject matter of Examples 31-42 includes, instructions to: perform an autofocus process on the fourth panoramic image.

In Example 44, the subject matter of Examples 31-43 includes, wherein the artifacts include at least one of: a spine of the patient, an opposing jaw structure of the patient, lips of the patient, a patient fixation device, or patient positioning device.

In Example 45, the subject matter of Examples 31-44 includes, wherein the external system includes: a display device, a storage system for diagnostic evaluation, an image processing system, or a remote server.

Example 46 is at least one machine-readable medium including instructions that, when executed by processing circuitry, cause the processing circuitry to perform operations to implement of any of Examples 1-45.

Example 47 is an apparatus comprising means to implement of any of Examples 1-45.

Example 48 is a system to implement of any of Examples 1-45.

Example 49 is a method to implement of any of Examples 1-45.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

1. A system for suppressing artifacts in a dental panoramic image obtained using an extraoral X-ray imaging device, the system comprising:
a communication circuity to receive X-ray projection data that was captured by scanning a dental arch of a patient during an imaging cycle; and
an image processor to:
construct a first panoramic image from the X-ray projection data, the first panoramic image constructed along a dental arch layer corresponding to the dental arch of the patient;
construct one or more second panoramic images from the X-ray projection data, the one or more second panoramic images constructed along an artifact layer corresponding to artifacts to be suppressed;
construct one or more third panoramic images that represent the one or more second panoramic images transformed to a position of the dental arch layer; and
construct a fourth panoramic image by performing a pixel-wise combination of the first panoramic image and the one or more third panoramic images to compensate for artifacts,
wherein the communication circuity is to transmit the fourth panoramic image to an external system.

2. The system of claim 1, wherein the first panoramic image is obtained by receiving an image file containing X-ray projection data from a separate imaging system, wherein the X-ray projection data is captured during a panoramic imaging cycle.

3. The system of claim 1 or 2, wherein to construct one or more second panoramic images, the image processor is configured to:
construct a plurality of panoramic images from the X-ray projection data, the plurality of panoramic images corresponding to artifact layers of artifacts to be suppressed; and
generate an artifact volume from the plurality of panoramic images, the artifact volume used with the layer position of the first panoramic image to construct the one or more third panoramic images.

4. The system of any one of claims 1 to 3, wherein to construct the one or more third panoramic images, the image processor is configured to:
generate a plurality of synthetic projection images from the one or more second panoramic images using X-ray projection geometry corresponding to the X-ray projection data; and
construct the one or more third panoramic images along the dental arch layer from the plurality of synthetic projection images using the X-ray projection geometry.

5. The system of any one of claims 1 to 4, wherein to construct the one or more third panoramic images, the image processor is configured to:
remap the one or more second panoramic images onto a position of the dental arch layer of the first panoramic image.

6. The system of any one of claims 1 to 5, wherein to construct the fourth panoramic image, the image processor is configured to:
adapt an intensity of the one or more third panoramic images to alter a strength of correction by using a local or global thresholding operation, using a global normalization operation, or using multiplication operation.

7. The system of any one of claims 1 to 6, wherein to construct the fourth panoramic image, the image processor is configured to:
filter the one or more third panoramic images to reduce information;
optionally wherein to filter the one or more third panoramic images, the image processor is configured to: use at least one of a low-pass filter with different strengths in a vertical direction and a horizontal direction.

8. The system of any one of claims 1 to 7, wherein the image processor is configured to:
post-process the fourth panoramic image, wherein the post-processing is adapted using the one or more third panoramic images;
optionally wherein to post-process the fourth panoramic image, the image processor is configured to: identify locations of artifacts in an artifact layer; and post-process the fourth panoramic image differently at the locations of the artifacts in the artifact layer compared to other regions of the fourth panoramic image;
optionally wherein to post-process the fourth panoramic image, the image processor is configured to: use at least one of a noise reduction, a contrast enhancement, an edge enhancement, or a logarithmization process;
optionally wherein to post-process the fourth panoramic image, the image processor is configured to use at least one of an adaptive filtering algorithm, a machine learning model, or a hybrid approach combining machine learning-based segmentation with other image processing techniques.

9. The system of any one of claims 1 to 8, wherein the image processor is configured to:
perform an autofocus process on the fourth panoramic image.

10. The system of any one of claims 1 to 9, wherein the artifacts include at least one of: a spine of the patient, an opposing jaw structure of the patient, lips of the patient, a patient fixation device, or patient positioning device.

11. The system of any one of claims 1 to 10, wherein the external system includes: a display device, a storage system for diagnostic evaluation, an image processing system, or a remote server.

12. A method for suppressing artifacts in a dental panoramic image obtained using an extraoral X-ray imaging device, comprising:
capturing X-ray projection data by scanning a dental arch of a patient during an imaging cycle;
constructing a first panoramic image from the X-ray projection data, the first panoramic image constructed along a dental arch layer corresponding to the dental arch of the patient;
constructing one or more second panoramic images from the X-ray projection data, the one or more second panoramic images constructed along an artifact layer corresponding to artifacts to be suppressed;
constructing one or more third panoramic images that represent the one or more second panoramic images transformed to a position of the dental arch layer;
constructing a fourth panoramic image by performing a pixel-wise combination of the first panoramic image and the one or more third panoramic images to compensate for artifacts; and
transmitting the fourth panoramic image to an external system.

13. The method of claim 12, wherein the first panoramic image is obtained by receiving an image file containing X-ray projection data from a separate imaging system, wherein the X-ray projection data is captured during a panoramic imaging cycle.

14. The method of claim 12 or 13, wherein constructing one or more second panoramic images comprises: constructing a plurality of panoramic images from the X-ray projection data, the plurality of panoramic images corresponding to artifact layers of artifacts to be suppressed; and generating an artifact volume from the plurality of panoramic images, the artifact volume used with the layer position of the first panoramic image to construct the one or more third panoramic images; and/or
wherein constructing the one or more third panoramic images comprises: generating a plurality of synthetic projection images from the one or more second panoramic images using X-ray projection geometry corresponding to the X-ray projection data; and constructing the one or more third panoramic images along the dental arch layer from the plurality of synthetic projection images using the X-ray projection geometry.

15. A non-transitory computer-readable medium including instructions for suppressing artifacts in a dental panoramic image obtained using an extraoral X-ray imaging device, which when executed by a computer, cause the computer to:
receive X-ray projection data that was captured by scanning a dental arch of a patient during an imaging cycle;
construct a first panoramic image from the X-ray projection data, the first panoramic image constructed along a dental arch layer corresponding to the dental arch of the patient;
construct one or more second panoramic images from the X-ray projection data, the one or more second panoramic images constructed along an artifact layer corresponding to artifacts to be suppressed;
construct one or more third panoramic images that represent the one or more second panoramic images transformed to a position of the dental arch layer;
construct a fourth panoramic image by performing a pixel-wise combination of the first panoramic image and the one or more third panoramic images to compensate for artifacts; and
transmit the fourth panoramic image to an external system.
